## Europäisches Patentamt

## European Patent Office

## Office européen des brevets

(19)

(11) Veröffentlichungsnummer: **0 004 550**
**B1**

(12) **EUROPÄISCHE PATENTSCHRIFT**

(45) Veröffentlichungstag der Patentschrift:
**15.07.81**

(21) Anmeldenummer: **79100564.8**

(22) Anmeldetag: **26.02.79**

(51) Int. Cl.³: **A 01 B 29/06,** F 16 H 37/00,
**B 06 B 1/16**

(54) **Landwirtschaftliches Schleppergerät mit Krumenpacker.**

(30) Priorität: **05.04.78 DE 2814588**

(43) Veröffentlichungstag der Anmeldung:
**17.10.79 Patentblatt 79/21**

(45) Bekanntmachung des Hinweises auf die Patenterteilung:
**15.07.81 Patentblatt 81/28**

(84) Benannte Vertragsstaaten:
**BE CH FR GB IT**

(56) Entgegenhaltungen:
**DE-A-2 113 320**
**DE-U-1 979 091**
**FR-A-567 084**
**FR-A-1 493 396**
**GB-A-891 016**

(73) Patentinhaber: **Maschinenfabrik Cramer,
Reimersstrasse, D-2950 Leer/Ostfriesland (DE)**

(72) Erfinder: **Krebs, Hermann, D-2951 Hesel (DE)**

(74) Vertreter: **Habbel, Hans-Georg, Dipl.-Ing.,
Postfach 3429 Am Kanonengraben 11, D-4400 Münster
(DE)**

## Landwirtschaftliches Schleppergerät mit Krumenpacker

Die Erfindung bezieht sich auf ein landwirtschaftliches Bodenbearbeitungsgerät mit einem am Schlepper anbaubaren Tragrahmen, daran angeordneten Geräten zur Saatbettbereitung, die u.a. mindestens einen mit Ringen in den lockeren Ackerboden eingreifenden Krumenpacker aufweist.

Es sind solche Gerätekombinationen bekannt, bei denen dem Krumenpacker ein Vorlaufgerät vorangeht und ein Nachlaufgerät folgt. Sie dienen der Aufgabe, den in rauher Furche überwinterten Acker in einem einzigen Arbeitsgang zur Saat vorzubereiten oder einen tiefgelockerten Boden kurzfristig nach dem Arbeitsgang des Pflügens saatfertig zu machen. Der Krumenpacker soll eine Verdichtung des Bodens herbeiführen, die den Anschluss der auszuäenden Körner an die Bodenfeuchtigkeit sicherstellt. Ohne den Einsatz des Krumenpackers würde die gleiche Wirkung durch das natürliche Absetzen des Bodens erst nach mehreren Wochen erreicht werden. Die Zeitspanne steht dem Landwirt aber häufig nicht zur Verfügung.

Obgleich ihre Wirkung grundsätzlich anders ist, werden Krumenpacker der Gattung «Rauhwalzen» zugeordnet (Fachkunde für Landmaschinenmechanik (Süssmann, Entholzner, Mitterhuber) Ernst Klett Verlag Stuttgart und Fachkunde für Traktoren- und Landmaschinenschlosser, 3. durchgesehene Auflage, VEB Verlag Technik Berlin). Mit diesen bekannten Geräten ist der erforderliche Bodenschluss jedoch häufig nicht erreichbar und es ist bekannt, diese Kombination deshalb durch weitere vorangesetzte Bodengeräte zu ergänzen, indem man etwa eine Schleppplanke und einen Gusspacker grossen Durchmessers voransetzt (Preisliste Becker Nr. 176, gültig ab 15.06.76, Seite 12 – «Saatbeetkombination Cultipacker» S, Typ KSPE).

Derartige vielteilige Gerätefolgen haben den Nachteil grosser Baulänge und hohen Eigengewichtes. Sie können am Feldende nur mit grossem Wenderadius gewendet werden und brauchen ein sehr grosses Vorgewende. Wenn solche Gerätefolgen als Anbaugeräte ausgebildet sind, benötigen sie sehr starke Schlepper und bereiten auch dann noch Schwierigkeiten beim Ausheben, besonders dadurch, dass sie die Schleppervorderräder entlasten und die Lenksicherheit erheblich vermindern.

Aus der DE-OS 21 13 320 ist es bekanntgeworden, eine Walze für landwirtschaftliche Zwecke mit einer Einrichtung zu versehen, um den Walzenkörper in Schwingungen zu versetzen. Die Walze soll dabei als Glattwalze oder Rauhwalze, z.B. Croscill- oder Cambridgewalze ausgebildet sein. Der Vorschlag hat keinen Eingang in die Praxis gefunden, da mit diesen Walzen lediglich eine Verdichtung der Oberfläche des zu bearbeitenden Bodens erfolgte – auch dann, wenn eine Croscill- oder Cambridgewalze eingesetzt wurde –, die angestrebte Verdichtung des Bodenuntergrundes aber nicht erreichbar war.

Schliesslich ist es aus dem DE-U 19 79 091 bekannt, walzenförmige Bodenverdichter mit Vibrationseinrichtungen für die Strassenbearbeitung einzusetzen.

Der Erfindung liegt die Aufgabe zugrunde, ein landwirtschaftliches Bodenbearbeitungsgerät zur Saatbettbereitung so auszubilden, dass ein Acker auch bei ungünstigen Bodenverhältnissen in einem einzigen Arbeitsgang saatfertig gemacht werden kann, wobei aber das Gerät eine verhältnismässig kurze Baulänge aufweist und die Lenksicherheit des Schleppers nicht gefährden soll und die Verdichtung des Ackers nicht an der Oberfläche, sondern in den tieferen Bodenschichten erfolgen soll.

Zur Lösung der Aufgabe wird vorgeschlagen, dass die mittelbar vom Tragrahmen getragenen Ringe motorisch in mindestens in vertikaler Richtung wirksam werdende Vibrationen versetzbar sind und derart eine Verdichtung der unteren Bodenschicht bewirken.

Bei der erfindungsgemässen Einrichtung erfolgt also im Gegensatz zu den zum Stand der Technik gehörenden, in Vibrationen versetzten Geräten trotz eines geringen Gerätegewichtes ein gutes Setzen des Bodens, wobei gleichzeitig der Oberfläche des Bodens eine leicht krümelige Struktur gegeben wird. Das erfindungsgemässe Gerät ist ein kurzbauendes, relativ leichtes Arbeitsgerät, das auch an leichtere Schlepper angebaut werden kann.

Weitere vorteilhafte Ausgestaltungen der erfindungsgemässen Vorrichtung sind in den Unteransprüchen definiert.

Ausführungsbeispiele der Erfindung werden nachfolgend anhand der Zeichnungen erläutert. Die Zeichnungen zeigen dabei in

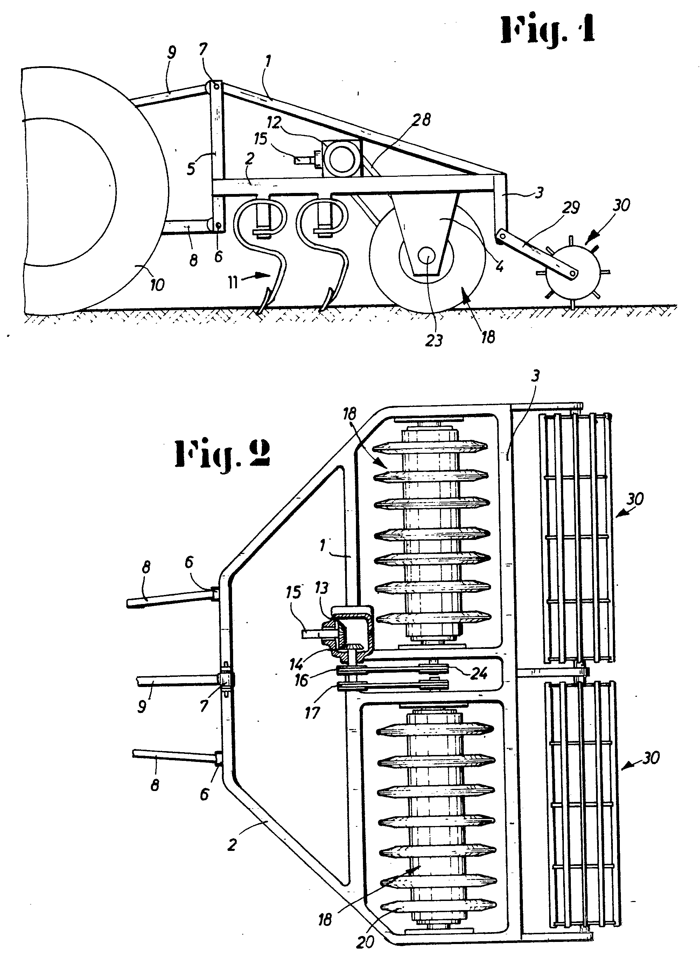

Fig. 1 eine Seitenansicht einer ersten Ausführungsform, in

Fig. 2 eine Draufsicht auf das in Fig. 1 dargestellte Gerät, in

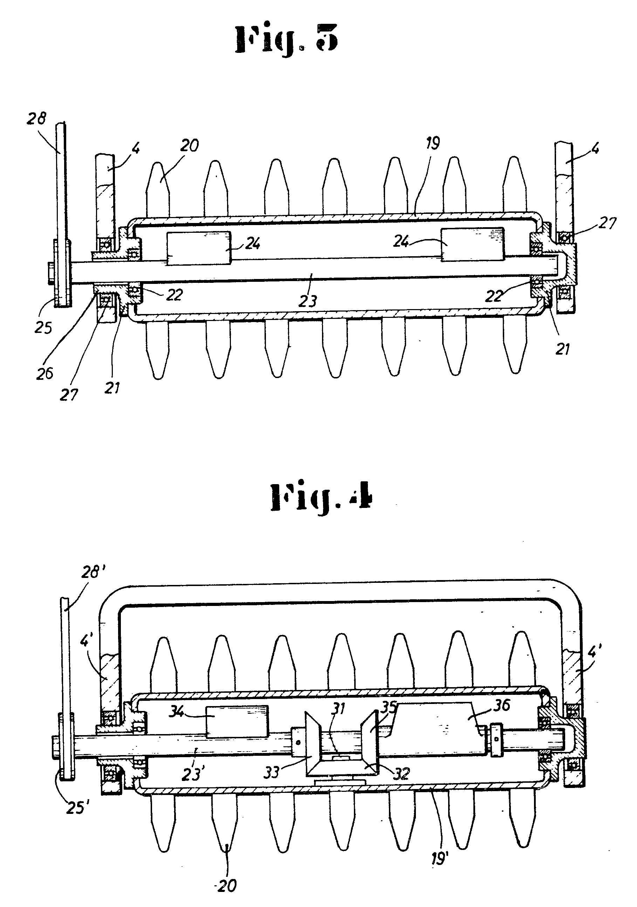

Fig. 3 einen Sagittalschnitt durch den rechten Krumenpacker gemäss Fig. 1 und 2, in

Fig. 4 einen Sagittalschnitt durch den Krumenpacker gemäss Fig. 5, in

Fig. 5 die Seitenansicht einer zweiten Ausführungsform des Gerätes und in

Fig. 6 eine Schnittdarstellung einer weiteren Ausführungsform eines Krumenpackers.

Der Tragrahmen 1 des Gerätes der ersten Beispielsausführung besteht aus einem waagerechten Rahmenteil 2 mit dem hinteren Querbalken 3 und den nach unten gerichteten Konsolen 4, an denen die Krumenpacker 18 gelagert sind sowie dem senkrechten Vorderteil 5. An diesem befinden sich die Anlenkstellen 6 und 7, an welche die Dreipunktlenker 8 und 9 des Ackerschleppers anschliessbar sind. Vom Schlepper ist lediglich ein Teil der Hinterräder 10 angedeutet.

Am waagerechten Rahmenteil 2 ist als Vorlaufgerät der Feinzinkengrubber 11 angeordnet. Auf einem Querbalken des Tragrahmens ist das Übersetzungsgetriebe 12 befestigt, in dessen Gehäuse ein Kegelradgetriebe mit den Kegelrädern 13 und 14 gelagert ist. Das grössere Kegelrad 13 sitzt auf der Antriebswelle 15, die an die Zapfwelle des Schleppers ankuppelbar ist. Auf der Welle des kleineren Kegelrades 14 sind zwei Keilriemenscheiben 16 und 17 befestigt.

Die Krumenpacker 18 bestehen aus dem Mantelrohr 19, an dessen Umfang die in den Ackerboden packend eingreifenden Ringe 20 und an dessen Seiten die Stirnwände 21 befestigt sind. Die Stirnwände nehmen auf ihren Innenseiten die Wälzlager 22 auf, mit denen der Krumenpacker auf der mit hoher Drehzahl umlaufenden Mittelwelle 23 gelagert ist. Auf der Mittelwelle sind die Unwuchtmassen 24 und die Keilriemenscheibe 25 befestigt. Die Stirnwände 21 haben auf ihrer Aussenseite zentrische Ansätze 26 für die Gleitlager 27, mit denen der Krumenpacker an den Konsolen 4 des Tragrahmens angeordnet ist. Die Keilriemenscheibe 25 wird mittels des Keilriemens 28 von der Keilriemenscheibe 16 des Übersetzungsgetriebes angetrieben. Der Antrieb des linken Krumenpackers erfolgt entsprechend von der Keilriemenscheibe 17 aus. Am hinteren Querbalken 3 des Tragrahmens sind die Schwenkarme 29 mit den Einwalzenkrümlern 30 höhenschwenkbar angelenkt.

Bei der in Fig. 4 dargestellten zweiten Beispielsausführung ist in der Mitte des Mantelrohres 19' auf dessen Innenseite die Achse 31 in radialer Richtung angeschweisst; auf dieser ist das Kegelrad 32 frei drehbar gelagert. Auf der Mittelwelle 23' sind die Keilriemenscheibe 25', das Kegelrad 33 und die Unwuchtmasse 34 befestigt. Weiterhin ist auf der Mittelwelle das Kegelrad 35, das mit der Unwuchtmasse 36 starr verbunden ist, frei drehbar gelagert. Die Kegelräder 33 und 35 stehen in ständigem Eingriff mit dem mittleren Kegelrad 32, so dass sie gegenläufig umlaufen. Die Unwuchtmassen sind derart angeordnet, dass sie bei waagerechter Lage in entgegengesetzten Richtungen von der Mittelwelle abstehen. Dadurch werden die waagerechten Fliehkräfte aufgehoben; der Krumenpacker schwingt nur in senkrechten Richtungen und nutzt die aufgenommene Energie in vollem Masse zur Verdichtung des Ackerbodens aus.

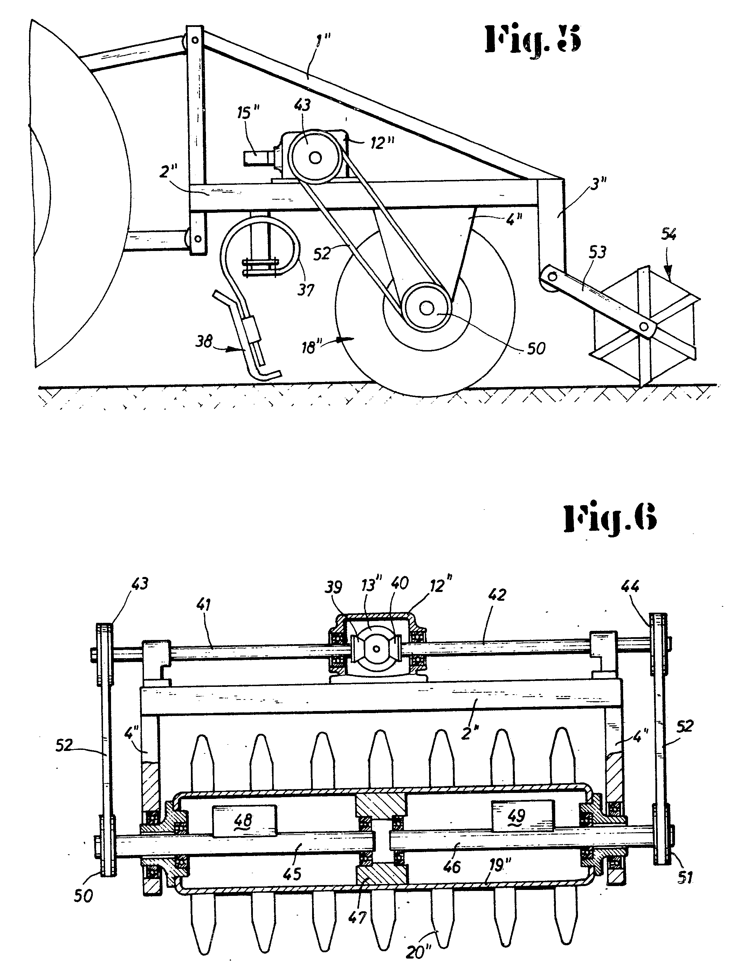

In der in den Fig. 5 und 6 dargestellten dritten Beispielsausführung ist am waagerechten Rahmenteil 2'' mittels der Haltefedern 37 die als Vorlaufgerät dienende Schleppschiene 38 befestigt. Auf dem waagerechten Rahmenteil sitzt ferner das Übersetzungsgetriebe 12''. Es besteht aus dem mit der Antriebswelle 15'' verbundenen grossen Kegelrad 13'' und mit den damit in Eingriff stehenden Kegelrädern 39 und 40. Diese sind auf den am Tragrahmen gelagerten rechten und linken Querwellen 41 und 42 befestigt. An den äusseren Enden der Querwellen sitzen die Zahnriemenscheiben 43 und 44. An den Konsolen 4'' ist der Krumenpacker 18'' gelagert. Der Krumenpacker 18'' besteht aus dem mit den Ringen 20'' besetzten Mantelrohr 19'', in dessen Innerem die

mitenander fluchtenden Mittelwellen 45 und 46 in einem mittleren Lagerblock 47 auf Wälzlagern gelagert sind. Auf jeder der beiden Mittelwellen 45 und 46 sind die Unwuchtmassen 48 und 49 und an den äusseren Enden die Zahnriemenscheiben 50 und 51 befestigt. Die Zahnriemenscheiben 43 und 50 sind miteinander durch den Zahnriemen 52 verbunden; desgleichen die Zahnriemenscheibe 44 mit der Zahnriemenscheibe 51.

Die Unwuchtmassen 48 und 49 sind so angeordnet, dass sie bei waagerechter Stellung in entgegengesetzten Richtungen von ihrer Drehachse abstehen, wodurch die waagerechten Fliehkräfte aufgehoben werden. Am hinteren Querbalken 3'' sind mittels der Schwenkarme 53 die Drahtwälzeggen 54 als Nachlaufgeräte höhenschwenkbar angelenkt.

## Patentansprüche

1. Landwirtschaftliches Bodenbearbeitungsgerät mit einem am Schlepper anbaubaren Tragrahmen (1), daran angeordneten Geräten (11, 30, 38, 54) zur Saatbettbereitung, die u.a. mindestens einen mit Ringen (20) in den lockeren Akkerboden eingreifenden Krumenpacker (18) aufweisen, dadurch gekennzeichnet, dass die mittelbar vom Tragrahmen (1) getragenen Ringe (20) motorisch in mindestens in vertikaler Richtung wirksam werdende Vibrationen versetzbar sind und derart eine Verdichtung der unteren Bodenschicht bewirken.

2. Landwirtschaftliches Schleppergerät nach Anspruch 1, dadurch gekennzeichnet, dass die Ringe (20) des Krumenpackers auf einem Mantelrohr (19) angeordnet sind, in dessen Innerem eine angetriebene Mittelwelle (23) rotiert, an der Unwuchtmassen befestigt sind und das Mantelrohr (19) mit Stirnwänden (21) versehen ist, die mit auf ihren Innenseiten angeordneten Lagern auf der Mittelwelle gelagert sind und an deren Aussenseiten die Lagerung (27) am Tragrahmen angeordnet ist.

3. Landwirtschaftliches Schleppergerät nach den Ansprüchen 1 und 2, dadurch gekennzeichnet, das am Tragrahmen (1) ein an die Zapfwelle des Schleppers ankuppelbares Übersetzungsgetriebe (12) befestigt ist, das über Kettentriebe oder Riementriebe (28) die Mittelwelle (23) antreibt.

4. Landwirtschaftliches Schleppergerät nach den Ansprüchen 1 bis 3, dadurch gekennzeichnet, dass im Inneren des Mantelrohres in zueinander gegenläufigem Drehsinn rotierende Unwuchtmassen derart auf ihren Drehachsen angeordnet sind, dass sich ihre horizontalen Fliehkräfte gegenseitig aufheben.

5. Landwirtschaftliches Schleppergerät nach den Ansprüchen 1 bis 4, dadurch gekennzeichnet, dass im Inneren des Mantelrohres (19) zwei miteinander fluchtende mit Unwuchtmassen (48, 49) versehene Mittelwellen (45, 46) angeordnet sind, die in gegenläufigem Drehsinn angetrieben werden.

6. Landwirtschaftliches Schleppergerät nach den Ansprüchen 1 bis 4, dadurch gekennzeichnet, dass auf der Mittelwelle (23') zwei mit Unwuchtmassen (34, 36) verbundene Kegelräder (33, 35) mit Abstand voneinander gelagert sind, deren eines auf der Mittelwelle starr befestigt und das andere frei drehbar auf ihr gelagert ist und beide mit einem dritten Kegelrad (32) in Eingriff stehen, das auf einer am Mantelrohr (19) befestigten radialen Achse gelagert ist.

7. Landwirtschaftliches Schleppergerät nach einem oder mehreren der Ansprüche 1 bis 6, dadurch gekennzeichnet, dass der Antrieb der Mittelwellen durch einen am Tragrahmen befestigten Antriebsmotor erfolgt.

## Claims

1. Agricultural soil-cultivation appliance with a supporting frame (1) which can be attached to a tractor, and with appliances (11, 30, 38, 54) which are located on said supporting frame and are intended for preparing the seed-bed and which have, among other things, at least one loose earth packer (18) which engages by means of rings (20) into the loose soil, characterised in that the rings (20) which are carried indirectly by the supporting frame (1) can be moved, by means of a motor, so as to vibrate effectively at least in a vertical direction and thus effect a compaction of the lower soil layer.

2. Agricultural tractor appliance according to Claim 1, characterised in that the rings (20) of the loose earth packer are located on a tubular shell (19), wihtin which rotates a driven central shaft (23) to which unbalancing weights are fastened, and the tubular shell (19) is provided with end walls (21) which are mounted on the central shaft by means of bearings located on their inner sides and on the outer sides of which is located the mounting (27) on the supporting frame.

3. Agricultural tractor appliance according to Claims 1 and 2, characterised in that fastened to the supporting frame (1) is a transmission gear-unit (12) which can be coupled to the power take-off shaft of the tractor and which drives the central shaft (23) via chain drives or belt drives (28).

4. Agricultural tractor appliance according to Claims 1 to 3, characterised in that within the tubular shell, unbalancing weights which rotate in opposite directions are arranged on their axes of rotation in such a way that their horizontal centrifugal forces cancel each other out.

5. Agricultural tractor appliance according to Claims 1 to 4, characterised in that located within the tubular shell (19) are two central shafts (45, 46) which are aligned with one another and are provided with unbalancing weights (48, 49), and which are driven in opposite directions of rotation.

6. Agricultural tractor appliance according to Claims 1 to 4, characterised in that two bevel gears (33, 35) connected to unbalancing weights (34, 36) are mounted on the central shaft (23'), so as to be spaced from one another, the one bevel gear being fastened rigidly on the central shaft and the other mounted to rotate freely thereon, and that both engage with a third bevel gear (32) which is mounted on a radial axle fastened to the tubular shell (19).

7. Agricultural tractor appliance according to one or more of Claims 1 to 6, characterised in that the central shafts are driven by means of a drive motor fastened to the supporting frame.

## Revendications

1. Instrument d'agriculture pour la préparation des sols muni d'un bâti porteur( 1), adaptable à un tracteur, sur lequel sont placés des instruments (11, 30, 38, 54) destinés à la préparation du lit de semences, parmi lesquels est prévu au moins un cultipacker (18) dont les disques (20) mordent la terre labourable ameublie, caractérisé en ce que les disques (20) portés indirectement par le bâti porteur (1) sont animés, par moteur, de vibrations dirigées au moins selon le sens vertical, et produisent ainsi un compactage de la couche inférieure du sol.

2. Instrument d'agriculture tracté conforme à la revendication 1, caractérisé en ce que les disques (20) du cultipacker sont disposés sur un tube de protection (19) à l'intérieur duquel tourne un arbre médian moteur (23) auquel sont fixées des masselottes d'équilibrage et dont le tube de protection (19) est pourvu de parois frontales (21) qui, au moyen d'appuis placés sur leurs faces internes, sont montées sur l'arbre médian et sur la face externe desquelles est disposé le palier (37) du bâti.

3. Instrument d'agriculture tracté conforme aux revendications 1 et 2, caractérisé en ce qu'au bâti porteur (1) est fixé un engrenage démultiplicateur (12), pouvant être couplé à l'arbre à broche du tracteur qui entraîne l'arbre médian (23) au moyen de transmissions par chaîne ou par courroie (28).

4. Instrument d'agriculture tracté conforme aux revendications 1 à 3, caractérisé en ce qu'à l'intérieur du tube de protection sont disposées des masselottes d'équilibrage tournant en sens inverse sur leurs axes de rotation afin que les composantes horizontales de la force centrifuge s'annulent entre elles.

5. Instrument d'agriculture tracté conforme aux revendications 1 à 4, caractérisé en ce qu'à l'intérieur du tube de protection (19) sont disposés deux arbres médians (45, 46) alignés et équipés de masselottes d'équilibrage (48, 49), lesquels arbres tournent en sens inverse.

6. Instrument d'agriculture tracté conforme aux revendications 1 à 4, caractérisé en ce que sur l'arbre de médian (23') sont montées deux roues coniques (33, 35) liées à des masselottes d'équilibrage (34, 36), distantes l'une de l'autre, dont l'une est fixée rigidement sur l'arbre médian et dont l'autre est montée à rotation libre dessus, les deux roues étant engrenées avec une troisième roue conique (32) qui est montée sur un axe fixé radialement au tube de protection (19).

7. Instrument d'agriculture tracté conforme à l'une ou plusieurs des revendications 1 à 6, caractérisé en ce que l'entraînement des arbres médians s'effectue au moyen d'un moteur d'entraînement fixé sur le bâti porteur.

# Fig. 1

# Fig. 2

Fig. 5

Fig. 4

0 004 550

# Fig. 5

# Fig. 6

11